# EUROPEAN PATENT APPLICATION

(11) **EP 4 546 549 A1**
(43) Date of publication of application: **30.04.2025**
(21) Application number: 23918156.3
(22) Date of filing: 19.04.2023
(51) Int. Cl.: H01M 50/503, H01M 50/502, H01M 50/244, H01M 50/249, H01M 50/298, H01M 50/209, H01M 10/42

(54) **BATTERY AND ELECTRIC DEVICE**

(30) Priority: 28.01.2023 CN 202320082586 U
(71) Applicant: Contemporary Amperex Technology (Hong Kong) Limited, Hong Kong (HK)
(72) Inventor: ZHANG, Wenhui, Ningde, Fujian 352100 (CN); YAO, Pengcheng, Ningde, Fujian 352100 (CN); CHEN, Xingdi, Ningde, Fujian 352100 (CN); WANG, Peng, Ningde, Fujian 352100 (CN)
(74) Representative: Herrmann, Uwe
(86) International application number: PCT/CN2023/089325
(87) International publication number: WO 2024/156154

(57) **Abstract**

A battery and an electrical apparatus are provided. The battery includes a box, a battery cell, an electrical component, and at least one adapter member; the box has a first accommodating cavity, a second accommodating cavity, and a partition that isolates the first accommodating cavity from the second accommodating cavity; the battery cell is accommodated in the first accommodating cavity; the electrical component is accommodated in the second accommodating cavity; the at least one adapter member is disposed on the partition and sealingly connected to the partition, the at least one adapter member electrically connecting the electrical component and the battery cell. **In** the battery provided in embodiments of the present application, the first accommodating cavity and the second accommodating cavity are isolated from each other to reduce the possibility of spreading thermal runaway occurring in one of the electrical component and the battery cell to the other, which is conducive to improving the reliability of the battery.

## Description

### Cross Reference to Related Application

The present application claims priority to Chinese Patent Application No. 202320082586.5, entitled "BATTERY AND ELECTRICAL APPARATUS", filed on January 28, 2023, which is incorporated herein by reference in its entirety.

### FIELD

The present application relates to the field of battery manufacturing technology, in particular to a battery and an electrical apparatus.

### BACKGROUND

Batteries are widely used in electronic devices such as mobile phones, laptops, electric bicycle, electric cars, electric airplanes, electric boats, electric toy cars, electric toy boats, electric toy airplanes, and electric tools. Battery cells may include cadmium nickel battery cells, hydrogen nickel battery cells, lithium-ion battery cells, secondary alkaline zinc manganese battery cells, etc.

In the development of battery technology, in addition to improving the use performance of batteries, how to improve the reliability of batteries is also a non-negligible issue. Therefore, how to improve the reliability of batteries is a continuously improving technical issue in the battery technology.

### SUMMARY

The present application provides a battery and an electrical apparatus, which can improve the reliability of the battery.

In a first aspect, a battery provided in embodiments of the present application includes a box, a battery cell, an electrical component, and at least one adapter member; the box has a first accommodating cavity, a second accommodating cavity, and a partition that isolates the first accommodating cavity from the second accommodating cavity; the battery cell is accommodated in the first accommodating cavity; the electrical component is accommodated in the second accommodating cavity; the at least one adapter member is disposed on the partition and sealingly connected to the partition, and the at least one adapter member is configured to electrically connect the electrical component and the battery cell.

According to the battery provided in the embodiments of the present application, the box includes a first accommodating cavity, a second accommodating cavity and a partition, the partition isolates the first accommodating cavity and the second accommodating cavity from each other, the adapter member is disposed on the partition, and is used to electrically connect the battery cell in the first accommodating cavity and the electrical component in the second accommodating cavity. On the premise that the electrical connection between the battery cell and the electrical component is achieved to ensure the normal operation of the battery, the adapter member is sealingly connected to the partition to isolate the first accommodating cavity and the second accommodating cavity from each other, so as to reduce the possibility of spreading thermal runaway occurring in one of the electrical component and the battery cell to the other, which is conducive to improving the reliability of the battery.

In some embodiments, the partition has a through hole communicating the first accommodating cavity and the second accommodating cavity, and at least a portion of the adapter member is disposed through the through hole. The battery further includes a sealing member surrounding the through hole and disposed between the adapter member and the partition to abut against the adapter member and the partition.

The partition has the through hole, which facilitates disposal of the adapter member on the partition. The battery includes the sealing member for sealing the through hole to isolate the first accommodating cavity and the second accommodating cavity from each other. In this way, on the premise of achieving mutual sealing between the first accommodating cavity and the second accommodating cavity, the connection between the adapter member and the partition is facilitated, and the connection strength between the adapter member and the partition is improved.

In some embodiments, the adapter member includes an insulation housing and a conductive terminal, the insulation housing has a receiving cavity with first openings at its two ends, and the conductive terminal is received in the receiving cavity. The conductive terminal is configured to electrically connect the battery cell and the electrical component, and the sealing member is disposed between the insulation housing and the partition to abut against the insulation housing and the partition. Thus, the risk of short circuits in the battery caused by contact between the conductive terminal and other conductive members is reduced, and the reliability of the battery is further improved.

In some embodiments, the insulation housing includes a housing body, and a flange portion disposed on a peripheral side of the housing body, the housing body has the receiving cavity, the flange portion has a groove, and at least a portion of the sealing member is received in the groove and disposed between the flange portion and the partition to abut against the flange portion and the partition. The flange portion has the groove, and at least a portion of the sealing member is received in the groove, so that the sealing member can be positioned though the groove, which improves the sealing reliability of the sealing member.

In some embodiments, the battery further includes a busbar and a conductive member, the busbar is disposed in the first accommodating cavity and electrically connects the battery cell and the conductive terminal, and the conductive member is disposed in the second accommodating cavity and electrically connects the electrical component and the conductive terminal. The position of the battery cell in the first accommodating cavity and the position of the electrical component in the second accommodating cavity can be reasonably set according to actual needs, and the electrical connections of the battery cell and the electrical component are achieved through the busbar and the conductive member. Thus, the flexibility of placement of the battery cell and the electrical component is improved.

In some embodiments, the conductive terminal has a first mounting hole at an end facing the first accommodating cavity, and the first mounting hole is used for fastening connection between the busbar and the conductive terminal; and/or the conductive terminal has a second mounting hole at an end facing the second accommodating cavity, and the second mounting hole is used for fastening connection between the conductive member and the conductive terminal. This facilitates the conductive connection between the conductive member and the conductive terminal or the busbar and the conductive terminal by threaded connection, pin connection, riveting, or the like, with high connection strength, thereby improving the reliability of connection between the conductive member and the conductive terminal or the busbar and the conductive terminal.

In some embodiments, the adapter member includes a plurality of conductive terminals insulated from each other. On the premise of achieving electrical connection between the battery cells and the electrical components though the conductive terminals, the structural compactness of the adapter member is improved and the space occupied by the adapter member is reduced.

In some embodiments, the battery further includes a plurality of adapter members, at least two of the adapter members are arranged in a first direction, the insulation housing has a shielding portion on at least one side in the first direction, and the shielding portion extends outward in an axial direction of the through hole by a preset distance. The shielding portion can organize the connection between the conductive terminal and other conductive members inside the battery, to reduce the risk of accidental contact of the conductive terminal and further reduce the risk of short circuits in the battery, thereby improving the reliability of the battery.

In some embodiments, the adapter member further includes a cover, and the end of the insulation housing facing the first accommodating cavity, and/or the end of the insulation housing facing the second accommodating cavity is covered with the cover. At least one of the end of the insulation housing facing the first accommodating and the end of the insulation housing facing the second accommodating cavity is covered with the cover to provide certain protection for the conductive terminal and the busbar or the conductive member, thereby reducing the risk of short circuits in the battery caused by accidental contact between other conductive members and the conductive terminal.

In a second aspect, an embodiment of the present application provides an electrical apparatus, including the battery as in the embodiments of the first aspect, where the battery is used for providing electrical energy.

The electrical apparatus provided according to the embodiment of the present application, including the battery provided in the embodiments of the present application, has the same technical effects, which will not be repeated here.

### BRIEF DESCRIPTION OF THE DRAWINGS

In order to explain the technical solutions of the embodiments of the present application more clearly, the accompanying drawings required for use in the embodiments of the present application will be briefly introduced below. Apparently, the accompanying drawings described below show only some embodiments of the present application. Those of ordinary skill in the art can derive other drawings based on the accompanying drawings without any creative effort.
FIG. 1 is a schematic structural view of a vehicle provided in an embodiment of the present application;
FIG. 2 is an exploded view of a battery with some structures omitted provided in an embodiment of the present application;
FIG. 3 is a structural schematic view of a battery module in the battery provided in an embodiment of the present application;
FIG. 4 is an exploded view of a battery cell in a battery provided in some embodiments of the present application;
FIG. 5 is a cross-sectional structural schematic view of a battery provided in an embodiment of the present application;
FIG. 6 is another cross-sectional structural schematic view of a battery provided in an embodiment of the present application;
FIG. 7 is an exploded structural view of an adapter member and a busbar in a battery provided in an embodiment of the present application;
FIG. 8 is a structural schematic view of an adapter member in the battery provided in an embodiment of the present application;
FIG. 9 is a structural schematic view of another adapter member in the battery provided in an embodiment of the present application;
FIG. 10 is a front view of an adapter member in a battery provided in an embodiment of the present application; and
FIG. 11 is a cross-sectional structural schematic view of FIG. 10 taken along line A-A. The accompanying drawings are not drawn to actual scale.

### Description of reference numerals:

1. Vehicle; 1a. Motor; 1b. Controller;
10. Battery; 11. Box; 11a. First accommodating cavity; 11b. Second accommodating cavity; 111. First box portion; 112. Second box portion; 113. Partition; 113a. Through hole;
20. Battery module;
30. Battery cell; 31. Housing; 311. Shell; 311a. Opening; 312. End cover; 32. Electrode assembly;
40. Electrical component;
50. Adapter member; 51. Insulation housing; 51a. Receiving cavity; 511. Housing body; 512. Flange portion; 513. Shielding portion; 512a. Groove; 52. Conductive terminal; 52a. First mounting hole; 52b. Second mounting hole; 53. Cover;
6. Sealing member;
71. Busbar; 72. Conductive member;
X. First direction.

### DETAILED DESCRIPTION

Implementations of the present application will be further described in detail below in conjunction with the accompanying drawings and embodiments. The detailed description of the following embodiments and the drawings are used for illustrating the principle of the present application, but cannot be used for limiting the scope of the present application, that is, the present application is not limited to the described embodiments.

In the description of the present application, it should be noted that, unless otherwise specified, "plurality of" means two or more; the orientations or positional relationships indicated by the terms "upper", "lower", "left", "right", "inner", "outer", etc. are only for facilitating description of the present application and simplifying the description, but do not indicate or imply that the pointed apparatuses or elements must have specific orientations or be constructed and operated in specific orientations. Therefore, the terms should not be understood to limit the present application. Furthermore, the terms "first" and "second" are only for the sake of description, and cannot be understood as indicating or implying the relative importance. "Vertical" is not strictly vertical, but within an allowable range of error. "Parallel" is not strictly parallel, but within an allowable range of error.

The "embodiment" mentioned in the present application means that specific features, structures or characteristics described in conjunction with the embodiment may be included in at least one embodiment of the present application. The phrase appearing at various places in the description does not necessarily refer to the same embodiment, or an independent or alternative embodiment exclusive of other embodiments. Those skilled in the art understand explicitly and implicitly that an embodiment described in the present application may be combined with other embodiments.

In the description of the present application, it should be noted that, unless otherwise specified and defined, the terms "mounted", "connected", and "connection" should be understood in a broad sense, for example, the "connection" may be fixed connected, detachable connection, integral connection, direct connection, or indirect connection by a medium. Those of ordinary skill in the art could understand the specific meanings of the above terms in the present application according to specific circumstances.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited in the embodiments of the present application. The battery cells may be cylindrical, flat, cuboid, or in other shapes, which is also not limited in the embodiments of the present application. The battery cells are generally divided into three types according to ways of packaging: cylindrical battery cells, square battery cells, and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cell.

The battery cell includes an electrode assembly and an electrolyte. The electrode assembly includes a positive electrode plate, a negative electrode plate, and a partition. The battery cell mainly relies on metal ions to move between the positive electrode plate and the negative electrode plate to work. The positive electrode plate includes a positive electrode current collector, and a positive electrode active material layer coated on a surface of the positive electrode current collector. The positive electrode current collector includes a positive electrode current collecting portion coated with the positive electrode active material layer, and a positive electrode protrusion protruding from the positive electrode current collecting portion. At least a portion of the positive electrode protrusion serving as a positive electrode tab is not coated with the positive electrode active material layer. Taking a lithium-ion battery as an example, a material for the positive electrode current collector may be aluminum, the positive electrode active material layer includes a positive electrode active material, which may be lithium cobalt oxide, lithium iron phosphate, ternary lithium, lithium manganate, or the like. The negative electrode plate includes a negative electrode current collector, and a negative electrode active material layer coated on a surface of the negative electrode current collector. The negative electrode current collector includes a negative electrode current collecting portion coated with the negative electrode active material layer, and a negative electrode protrusion protruding from the negative electrode current collecting portion. At least a portion of the negative electrode protrusion serving as a negative electrode tab is not coated with the negative electrode active material layer, and the negative electrode protrusion. A material of the negative electrode current collector may be copper, the negative electrode active material layer includes a negative electrode active material, which may be carbon, silicon, or the like. In order to ensure that no fusing occurs when high current passes through, there is a plurality of positive electrode tabs laminated together, and there is a plurality of negative electrode tabs laminated together. The material of the partition may be polypropylene (PP), polyethylene (PE), or the like. Moreover, the electrode assembly may be of a spiral wound structure or a laminated structure, which are not limited in the embodiments of the present application.

The battery has a distribution box, which contains electrical components such as a circuit board, a relay, a fuse, a current sensor, and a pre-charging resistor. The battery is connected to an electrical apparatus through the distribution box to distribute the electrical energy of the battery to various electrical appliances of the electrical apparatus reasonably, such as a motor controller, a vehicle heater, and an air conditioning compressor.

After discovering the problem that the distribution box of the battery is prone to thermal runaway during working, the inventor conducted systematic analysis and research on the structure and working process of the battery. The results showed that the space accommodating battery cells and the space in the distribution box communicate with each other in the battery. Therefore, when the battery cells have thermal runaway or there is a risk of thermal runaway at high temperatures in the working process, heat will spread to the distribution box, and thermal runaway then occurs in the distribution box, which seriously affects the reliability of the battery.

Based on the above problems discovered by the inventor, the inventor made improvements to the structure of the battery. The technical solutions described in the embodiments of the present application are applicable to batteries and electrical apparatuses using the batteries.

The battery provided according to the embodiments of the present application includes a box, battery cells, electrical components, and at least one adapter member. The box has a first accommodating cavity, a second accommodating cavity, and a partition configured to isolate the first accommodating cavity and the second accommodating cavity. The battery cells are accommodated in the first accommodating cavity, and the electrical components are accommodated in the second accommodating cavity. The adapter member is disposed on the partition and sealingly connected to the partition, and the at least one adapter member is electrically connected to the electrical components and the battery cells.

According to the battery provided in the embodiments of the present application, the first accommodating cavity for accommodating battery cells is isolated from the second accommodating cavity for accommodating electrical components, and the battery cells are electrically connected to the electrical components though the adapter member. In this case, when the battery works normally, the battery cells and the electrical components can maintain the state of electrically connecting to ensure normal work of the battery, and can further maintain the state that they are isolated from each other, which can reduce the risk of thermal runaway spreading to the second accommodating cavity when the battery cells undergo the thermal runaway or have a relative high temperature before undergoing the thermal runaway, and can further reduce the risk of thermal runaway of the electrical components in the second accommodating cavity, thereby improving the reliability of the battery.

The electrical apparatus may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be an all-electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electrical apparatus.

For convenient description, the electrical apparatus is a vehicle as an example for description in the following embodiments.

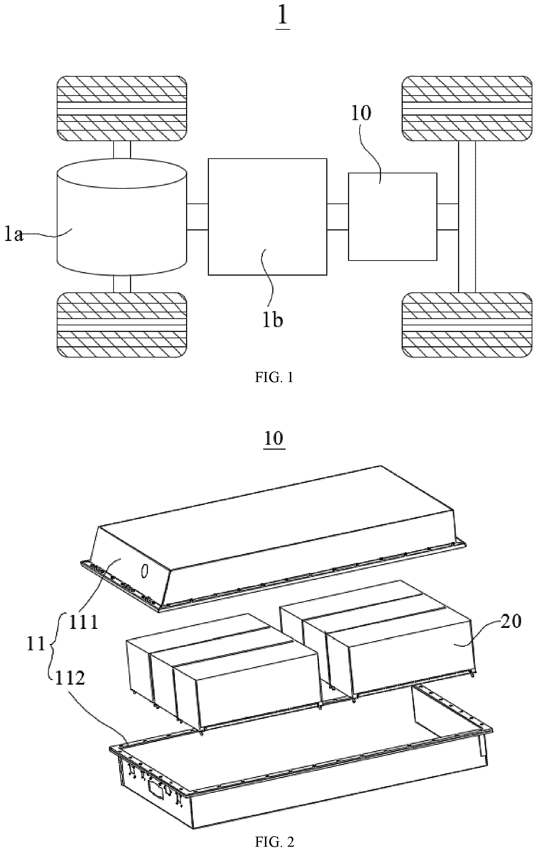

As shown in FIG. 1, a battery 10 is provided inside a vehicle 1. The battery 10 may be disposed at the bottom, head, or tail of the vehicle 1. The battery 10 is configured to supply power to the vehicle 1. For example, the battery 10 may be used as an operation power supply of the vehicle 1.

The vehicle 1 may further include a controller 1b and a motor 1a. The controller 1b is configured to control the battery 10 to supply power to the motor 1a, for example, for a working power demand of the vehicle 1 during startup, navigation and running.

In some embodiments of the present application, the battery 10 may be used not only as an operation power supply of the vehicle 1, but also as a driving power supply of the vehicle 1 to replace or partially replace fuel or natural gas to provide driving power for the vehicle 1.

As shown in FIG. 2, the battery 10 includes battery cells (not shown in FIG. 2). The battery 10 may further include a box 11 configured to accommodate the battery cells.

The box is configured to accommodate the battery cells, and the box 11 may have many structural forms. In some embodiments, the box may include a first box portion 111 and a second box portion 112 that are covered with each other and jointly define an accommodating pace for accommodating the battery cells. The second box portion 112 may be of a hollow structure, an end of which is provided with an opening, the first box portion 111 is of a plate-like structure, and the opening side of the second box portion 112 is covered with the first box portion 111 to form the box with the accommodating space. The first box portion 111 and the second box portion 112 may each be of hollow structure, a side of which is provided with an opening. The opening side of the second box portion 112 is covered with that of the first box portion 111 to form the box 11 with the accommodating space. The first box portion 111 and the second box portion 112 may be in various shapes, such as cylindrical or cuboid.

To improve the sealing performance after the first box portion 111 is connected to the second box portion 112, a sealing member such as a sealant or a sealing ring may be further disposed between the first box portion 111 and the second box portion 112.

Assuming that the second box portion 112 is covered with the first box portion 111, the first box portion 111 may be referred to as an upper box cover, and the second box portion 112 may be referred to as a lower box.

There may be one or more battery cells in the battery 10. If there is a plurality of battery cells, the battery cells may be connected in series, in parallel, or in series and parallel. The series-parallel connection refers to a combination of series connection and parallel connection in the plurality of battery cells. The plurality of battery cells may be directly connected in series, in parallel, or in series and parallel together, and then the whole constituted by the plurality of battery cells is accommodated in the box 11. Alternatively, the plurality of battery cells may be first connected in series, in parallel, or in series and parallel to form a battery module 20, and then the plurality of battery modules 20 are connected in series, in parallel, or in series and parallel to form a whole accommodated in the box.

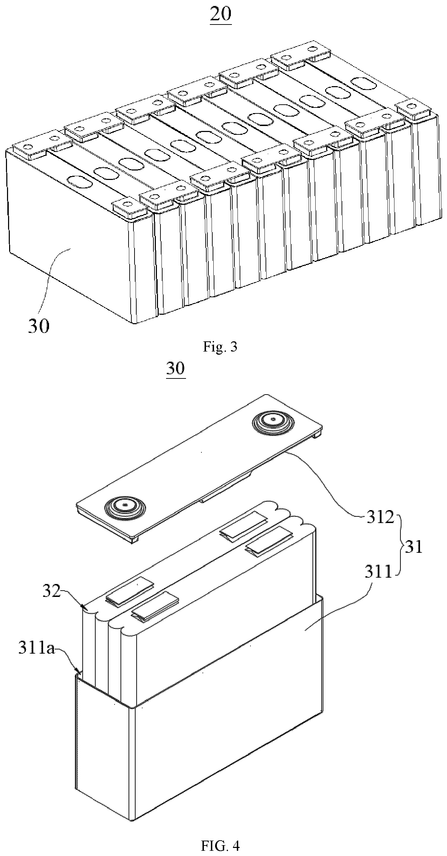

In some embodiments, refer to FIG. 3 which is a schematic structural view of the battery module 20 shown in FIG. 2. There is a plurality of battery cells 30 in the battery module 20. The plurality of battery cells 30 are first connected in series, in parallel, or in series and parallel to form the battery module 20, and then the plurality of battery modules 20 are connected in series, in parallel, or in series and parallel to form a whole accommodated in the box 11.

In some embodiments, the plurality of battery cells 30 in the battery module 20 may be electrically connected by a busbar to achieve parallel, series, or series and parallel connection of the plurality of battery cells 30 in the battery module 20.

Refer to FIG. 4. FIG. 4 is an exploded view of the battery cell 30 shown in FIG. 3. The battery cell 30 provided in the embodiments of the present application includes an electrode assembly 32 and a housing 31 with an accommodating space, and the electrode assembly 32 is accommodated in the accommodating space.

In some embodiments, the housing 31 may include a shell 311 and an end cover 312. The shell 311 is of a hollow structure, one end of which is provided with an opening, and an opening 311a of the shell 311 is covered with the end cover 312 to form a sealing connection, so as to form a sealed space for accommodating the electrode assembly 32 and an electrolyte.

When the battery cell 30 is assembled, the electrode assembly 32 may be first placed into the shell 311, and then the opening of the shell 311 is covered with he end cover 312, and the electrolyte is injected into the shell 311 via an electrolyte injection port on the end cover 312.

In some embodiments, the shell 31 may also be configured to accommodate an electrolyte, such as an electrolytic solution. The housing 31 may be in various structural forms.

The shell 311 may be in various shapes, such as cylindrical or cuboid. The shape of the shell 311 may be determined by the specific shape of the electrode assembly 32. For example, if the electrode assembly 32 is of a cylindrical structure, the shell 311 may be of a cylindrical structure; if the electrode assembly 32 is of a rectangular structure, the shell 311 may be of a rectangular structure. In FIG. 4, for example, both the shell 311 and the electrode assembly 32 are each of rectangular structures.

The material of the shell 311 may be various, such as copper, iron, aluminum, stainless steel, or aluminum alloy, which is not limited in the embodiments of the present application.

One or more electrode assemblies 32 may be accommodated in the shell 311. In FIG. 4, there are two electrode assemblies 32 accommodated in the shell 311.

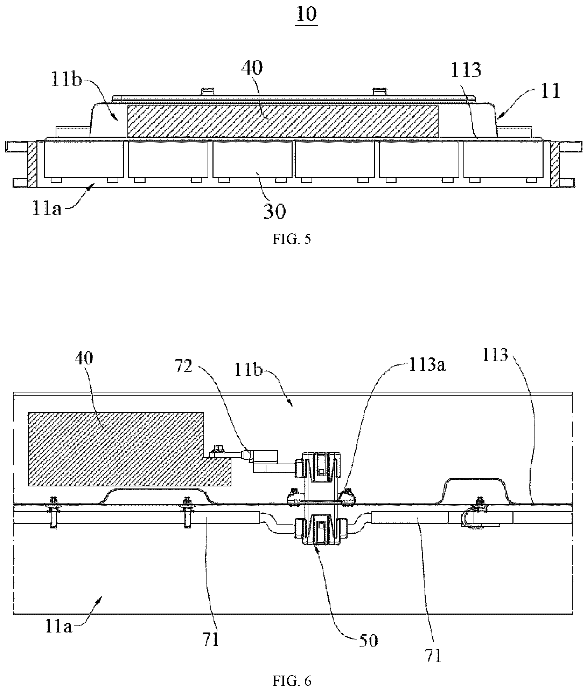

As shown in FIG. 5 and FIG. 6, the battery provided according to the embodiments of the present application includes a box 11, a battery cell 30, an electrical component 40, and at least one adapter member 50. The box 11 is provided with a first accommodating cavity 11a, a second accommodating cavity 11b, and a partition 113 configured to isolate the first accommodating cavity 11a from the second accommodating cavity 11b. The battery cell 30 is accommodated in the first accommodating cavity 11a, and the electrical component 40 is accommodated in the second accommodating cavity 11b. The adapter member 50 is disposed on the partition 113 and sealingly connected to the partition 113, and the at least one adapter member 50 is configured to electrically connect the electrical component 40 and the battery cell 30.

The partition 113 isolates the first accommodating cavity 11a and the second accommodating cavity 11b from each other, and the first accommodating cavity 11a and the second accommodating cavity 11b each maintain an independent sealed state, making it difficult to transfer sparks or flames generated in any one by faults such as thermal runaway to the other. Thus, the possibility that thermal runaway occurs in one of the battery cell 30 and the electrical component 40 due to the thermal runaway in the other can be reduced.

The partition 113 is configured to isolate the first accommodating cavity 11a from the second accommodating cavity 11b, and may be disposed inside the box 11. The partition 113 may be in the shape of a plate or block or in other irregular shapes, which may be selected according to actual needs.

The first accommodating cavity 11a and the second accommodating cavity 11b may be arranged horizontally, or the first accommodating cavity 11a and the second accommodating cavity 11b may be arranged in a direction of gravity, which may be selected according to actual needs. For example, the first accommodating cavity 11a is disposed below the second accommodating cavity 11b in the direction of gravity.

The second accommodating cavity 11b may accommodate only the electrical component 40, or other components of the battery or the vehicle such as a circuit board may be integrated together in the first accommodating cavity 11a.

The battery cell 30 in the first accommodating cavity 11a is connected to the end of the adapter member 50 facing the first accommodating cavity 11a by a wire harness or wires, and the electrical component 40 in the second accommodating cavity 11b is connected to the end of the adapter member 50 facing the second accommodating cavity 11b by a wire harness or wires. In this case, the adapter member 50 serves as an intermediate connector to achieve the electrical connection between the battery cell 30 and the electrical component 40, thereby ensuring the normal operation of the battery.

The adapter member 50 is sealingly connected to the partition 113 to maintain respective sealing performance of the first accommodating cavity 11a and the second accommodating cavity 11b. In this case, the respective sealing performance of the first accommodating cavity 11a and the second accommodating cavity 11b can be maintained, and the electrical connection between the battery cell 30 in the first accommodating cavity 11a and the electrical component 40 in the second accommodating cavity 11b can be achieved.

Optionally, the electrical component 40 may include at least one of a relay, a fuse, and a sensor. The relay and the fuse are used for over-current or over-temperature protection. Specifically, when the voltage or current provided by the battery 10 to the electrical apparatus is overloaded, the relay and the fuse protect the battery 10 or relevant electrical appliances of the electrical apparatus in an open-circuit manner. The sensor may be configured to collect information such as voltage or current in the circuit to determine whether the relevant electrical appliances are in a normal working state. In this way, the electrical component 40 may be provided with relevant components as needed to ensure the normal operation of the electrical component 40.

Optionally, the battery 10 may further include a battery management system accommodated in the second accommodating cavity 11b, and the at least one adapter member 50 is electrically connected the battery management system and the battery cell 30. Specifically, the battery management system may integrate components such as a circuit board, a sensor, a computing unit, and a processor. The battery management system is electrically connected to the battery cell 30 by a wire harness to collect various working parameters such as temperature, pressure, or current of the battery cell 30. Optionally, the battery management system may perform preliminary computation or processing on the collected data to preliminarily determine the working state of the battery cells 30.

Optionally, the battery management system may further send a control signal to the battery cell 30 to facilitate next operation of the battery cell 30. The battery management system exchanges information with the battery cell 30. The battery cell 30 transmits relevant working parameters such as temperature, pressure, or current to the battery management system, or the battery management system transmits a control signal to the relevant battery cell 30 to enable the battery cell 30 to make corresponding response.

Optionally, the battery management system may further be electrically connected to matching components. For example, the battery management system is electrically connected to the electrical component 40 by a wire harness or other structure to collect information such as voltage, current, or temperature of the electrical component 40.

The battery management system is integrated into the second accommodating cavity 11b, the integration of the internal structure of the battery 10 is improved. In addition, as the battery management system is isolated from the battery cell 30, when the battery cell 30 undergoes thermal runaway, the risk of spreading the thermal runaway to the battery management system to cause thermal runaway of the battery management system is reduced, which further improves the reliability of the battery 10.

Optionally, there may be one adapter member 50, or there may be a plurality of adapter members 50 connecting different components in the first accommodating cavity 11a and the second accommodating cavity 11b respectively.

In the embodiments, there are a plurality of adapter members 50 which electrically connect electrical components and battery cells 30, or some of which electrically connect electrical components and battery cells 30, which may be selected according to actual needs.

According to the battery 10 provided in the embodiments of the present application, the box 11 includes a first accommodating cavity 11a, a second accommodating cavity 11b and a partition 11 that isolates the first accommodating cavity 11a and the second accommodating cavity 11b from each other. The adapter member 50 is disposed on the partition 113, and the adapter member 50 electrically connect the battery cell 30 in the first accommodating cavity 11a and the electrical component 40 in the second accommodating cavity 11b. On the premise that the electrical connection between the battery cell 30 and the electrical component 40 is achieved to ensure the normal operation of the battery 10, the adapter member 50 is sealingly connected to the partition 113 to isolate the first accommodating cavity 11a and the second accommodating cavity 11b from each other, so as to reduce the possibility of spreading thermal runaway occurring in one of the electrical component 40 and the battery cell 30 to the other, which is conducive to improving the reliability of the battery 10.

As shown in FIGS. 6, 10, and 11, in some embodiments, the partition 113 is provided with a through hole 113a connecting the first accommodating cavity 11a and the second accommodating cavity 11b, and at least a portion of the adapter member 50 is disposed through the through hole 113a. The battery 10 further includes a sealing member 6 that is disposed around the through hole 113a, and is disposed between the adapter member 50 and the partition 113 to abut against the adapter member 50 and the partition 113.

As at least a portion of the adapter member 50 is disposed through the through hole 113a, the entire adapter member 50 may be located within the through hole 113a, or a portion of the adapter member 50 may be located within the through hole 113a. For example, a portion of the adapter member is located within the through hole 113a, another portion of the adapter member is located within the first accommodating cavity 11a and electrically connected to the battery cell 30, and remaining portion of the adapter member is located within the second accommodating cavity 11b and electrically connected to the electrical component 40.

With surrounding the through hole 113a and disposed between the adapter member 50 and the partition 113 to abut against the adapter member 50 and the partition 113, the sealing member 6 may be disposed on the side of the partition 113 facing the first accommodating cavity 11a, or the sealing member 6 may be disposed on the side of the partition 113 facing the second accommodating cavity 11b. The adapter member 50 is fastened to the partition 113, and the sealing member 6 produces compression deformation and abuts against the adapter member 50 and the partition 113. The deformation of the sealing member 6 is utilized to achieve sealing connection of mounting holes, thereby isolating the first accommodating cavity 11a and the second accommodating cavity 11b from each other.

Accordingly, the partition 113 is provided with the through hole 113a, which facilitates the adapter member 50 to be disposed on the partition 113. The battery 10 includes the sealing member 6 sealing the through hole 113a to isolate the first accommodating cavity 11a and the second accommodating cavity 11b from each other. In this way, on the premise that the first accommodating cavity 11a and the second accommodating cavity 11b are sealed with each other, the connection between the adapter member 50 and the partition 113 is facilitated, and the connection strength between the adapter member 50 and the partition 113 is improved.

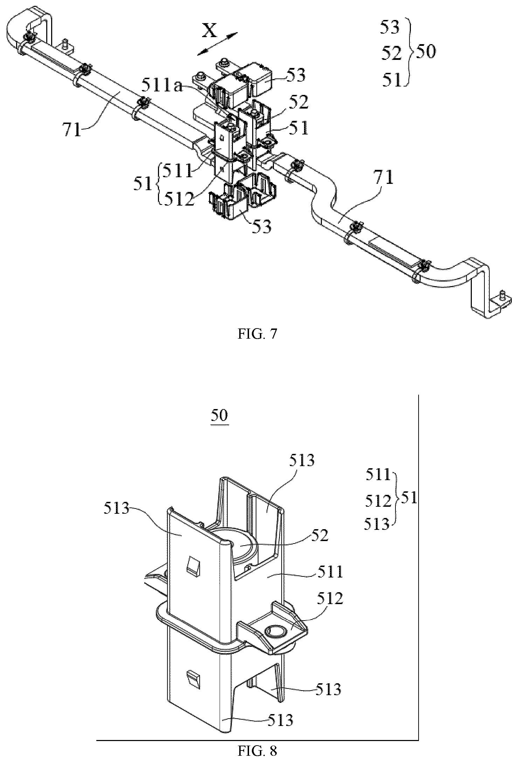

As shown in FIGS. 7, 8 and 9, in some embodiments, the adapter member 50 includes a conductive terminal 52, and an insulation housing 51 having a receiving cavity 51a with first openings each at its two ends, and the conductive terminal 52 is received in the receiving cavity 51. The conductive terminal 52 is configured to electrically connect the battery cell 30 and the electrical component 40, and the sealing member 6 is disposed between the insulation housing 51 and the partition 113 to abut against the insulation housing 51 and the partition 113.

A portion of the insulation housing 51 may be disposed through the through hole 113a, and the first accommodating cavity 11a and the second accommodating cavity 11b are isolated from each other though the sealing connection between the insulation housing 51 and the partition 113.

With received in the receiving cavity 51, the conductive terminal 52 may fill the receiving cavity 51 and abut against the insulation housing 51 in the receiving cavity 51, to reduce the risk that the first accommodating cavity 11a and the second accommodating cavity 11b conduct with each other though the receiving cavity 51a of the insulation housing 51.

For example, the insulation housing 51 may be processed by injection molding and injection molded with the conductive terminal 52.

The conductive terminal 52 is configured to achieve the electrical connection between the battery cell 30 and the electrical component 40, the insulation housing 51 can provide insulation for the conductive terminal 52 and the partition 113 or other conductive members in the first accommodating cavity 11a and the second accommodating cavity 11b, thereby reducing the risk of short circuits in the battery 10 caused by contact between the conductive terminal 52 and other conductive members, and further improving the reliability of the battery 10.

Still referring to FIGS. 7, 8 and 9, in some embodiments, the insulation housing 51 includes a housing body 511 having a receiving cavity 51a, and a flange portion 512 disposed on a peripheral side of the housing body 511 and having a groove 512a, and at least a portion of the sealing member 6 is received in the groove 512a and is disposed between the flange portion 512 and the partition 113 to abut against the flange portion 512 and the partition 113.

Optionally, the flange portion 512 may be arranged in a ring shape surrounding the housing body 511, or the flange portion 512 may be disposed on a portion of the peripheral side of the housing body 511. For example, the insulation housing 51 includes a plurality of flange portions 512 spaced apart in the circumferential direction of the housing body 511.

Specifically, the insulation housing 51 is fastened to the partition 113 though the flange portion 512 in a threaded connection, riveting, welding, or pin connection manner. The flange portion 512 has groove 512a, and at least a portion of the sealing member 6 is received in the groove 512a to position the sealing member 6 through the groove 512a, thereby reducing the risk of sealing failure of the sealing member 6 caused by the displacement of the sealing member 6 relative to the adapter member 50 or the partition 113.

The flange portion 512 has a groove 512a, and at least a portion of the sealing member 6 is received in the groove 512a, so that the sealing member 6 can be positioned by the groove 512a, which improves the sealing reliability of the sealing member 6.

As shown in FIG. 6, in some embodiments, the battery 10 further includes a busbar 71 disposed in the first accommodating cavity 11a and electrically connecting the battery cell 30 and the conductive terminal 52, and a conductive member 72 disposed in the second accommodating cavity 11b and electrically connecting the electrical component 40 and the conductive terminal 52.

For example, both the busbar 71 and the conductive member 72 each include copper bars. The electrical connection between the battery cell 30 and the conductive terminal 52 is achieved through the busbar 71, and the electrical connection between the electrical component 40 and the conductive terminal 52 is achieved through the conductive member 72.

With providing the bus member 71 and the conductive member 72, the position of the battery unit 30 in the first accommodating cavity 11a and the position of the electrical component 40 in the second accommodating cavity 11b can be reasonably set according to actual needs, and the battery unit 30 is electrically connected to the electrical component 40 through the bus member 71 and the conductive member 72.. In this way, it is beneficial to improve the flexibility of the arrangement position of the battery cell 30 and the electrical component 40.

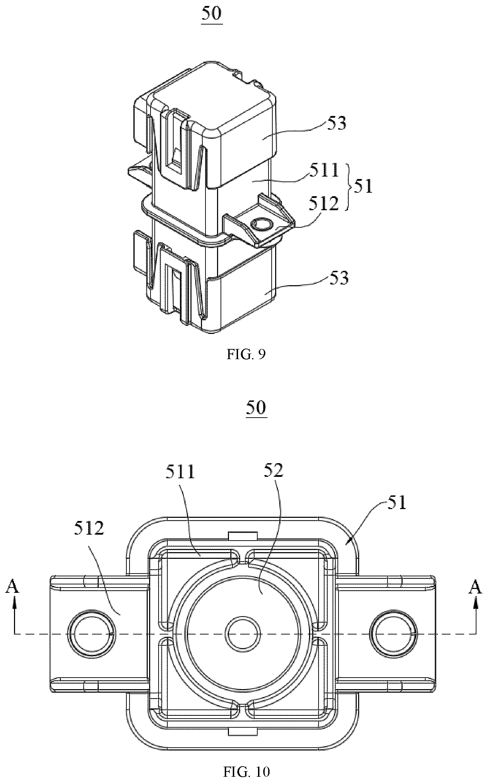

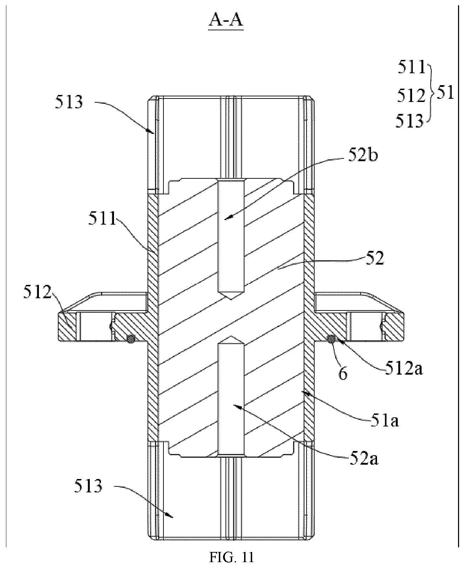

As shown in FIG. 10 and FIG. 11, in some embodiments, the conductive terminal 52 has a first mounting hole 52a at the end facing the first accommodating cavity 11a, and the first mounting hole 52a configured to fasten the busbar 71 to the conductive terminal 52.

The first mounting hole 52a may be an unthreaded hole, or the first mounting hole 52a may be a threaded hole. The conductive terminal 52 has the first mounting hole 52a at an end facing the first accommodating cavity 11a, which facilitates the conductive connection between the busbar 71 and the conductive terminal 52 by threaded connection, pin connection, riveting, or the like, with high connection strength, thereby improving the reliability of connection between the conductive terminal 52 and the busbar 71.

Still referring to FIG. 10 and FIG. 11, in some embodiments, the conductive terminal 52 has a second mounting hole 52b at the end facing the second accommodating cavity 11b, and the second mounting hole 52b is configured to fasten the conductive member 72 to the conductive terminal 52.

The second mounting hole 52b may be an unthreaded hole like the first mounting hole 52a, or the second mounting hole 52b may be a threaded hole. The conductive terminal 52 has the second mounting hole 52b, which facilitates the conductive connection between the conductive member 72 and the conductive terminal 52 by threaded connection, pin connection, riveting, or the like, with relative high connection strength, thereby improving the reliability of connection between the conductive member 72 and the conductive terminal 52.

In some embodiments, the adapter member 50 includes a plurality of conductive terminals 52 insulated from each other.

The electrical component 40 may include various different components, each of which is electrically connected to the battery cell 30. Therefore, a plurality of conductive terminals 52 or a plurality of adapter members 50 are provided to achieve the electrical connection between different electrical components 40 and battery cells 30. For example, the positive electrodes and the negative electrodes of the battery cells 30 are electrically connected to different electrical components 40 respectively.

The adapter member 50 includes a plurality of conductive terminals 52 insulated from each other, so that on the premise of achieving electrical connection between the battery cells 30 and the electrical components 40 by the conductive terminals 52, the structural compactness of the adapter member 50 is improved and the space occupied by the adapter member 50 is reduced.

As shown in FIG. 7, in some embodiments, the battery 10 includes a plurality of adapter members 50, at least two of the adapter members 50 are arranged in a first direction X, at least one side of the insulation housing 51 in the first direction X is provided with a shielding portion 513 extending outward in an axial direction of the through hole 113a by a preset distance.

The first direction X may be any direction parallel to the surface of the partition 113 and may be set as needed. As the shielding portion 513 may be disposed on at least one side of the insulating housing 51 in the first direction X, both sides of the insulation housing 51 in the first direction X are each provided with a shielding portion 513, or either side of the insulation housing 51 in the first direction X is provided with a shielding portion 513.

As the shielding portion 513 extends a preset distance along the circumference of the through hole 113a, and in the process of electrically connecting the conductive terminal 52 and the electrical component 40 or electrically connecting the conductive terminal 52 and the battery cell 30, or after the above connection is completed, the shielding portion 513 can organize the connection between the conductive terminal 52 and other conductive members inside the battery 10 to reduce the risk of accidental contact of the conductive terminal 52 and further reduce the risk of short circuits in the battery 10, thereby improving the reliability of the battery 10.

As shown in FIG. 7 and FIG. 9, in some embodiments, the adapter member 50 further includes a cover 53, and the end of the insulation housing 51 facing the first accommodating cavity 11a, and/or the end of the insulation housing 51 facing the second accommodating cavity 11b is covered with the cover 53.

Specifically, after the conductive terminal 52 is electrically connected to the battery cell 30 or the electrical component 40, and at least one of the end of the insulation housing 51 facing the first accommodating cavity 11a and the end thereof facing the second accommodating cavity 11b is covered with the cover 53, to provide certain protection for the conductive terminal 52 and the busbar 71 or the conductive member 72, thereby reducing the risk of short circuits in the battery 10 caused by accidental contact between other conductive members and the conductive terminal 52.

An electrical apparatus provided according to an embodiment of the present application includes the battery 10 provided in any of the above embodiments, which is configured to provide electrical energy.

The electrical apparatus provided according to the embodiment of the present application, including the battery 10 provided in any of the above embodiments, has the same technical effects, which will not be repeated here.

Although the present application is described with reference to the preferred embodiments, various improvements can be made and components therein can be replaced with equivalents without departing from the scope of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A battery, comprising:
a box having a first accommodating cavity, a second accommodating cavity, and a partition that isolates the first accommodating cavity from the second accommodating cavity;
a battery cell accommodated in the first accommodating cavity;
an electrical component accommodated in the second accommodating cavity; and
at least one adapter member disposed on the partition, and sealingly connected to the partition, and the at least one adapter member electrically connecting the electrical component and the battery cell.

2. The battery according to claim 1, wherein the partition has a through hole communicating the first accommodating cavity and the second accommodating cavity, and at least a portion of the adapter member is disposed through the through hole; and
the battery further comprises a sealing member that is disposed around the through hole and between the adapter member and the partition to abut against the adapter member and the partition.

3. The battery according to claim 2, wherein the adapter member comprises:
an insulation housing with a receiving cavity, two ends of the receiving cavity each having a first opening, and the sealing member being disposed between the insulation housing and the partition to abut against the insulation housing and the partition; and
a conductive terminal received in the receiving cavity and electrically connecting the battery cell and the electrical component.

4. The battery according to claim 3, wherein the insulation housing comprises:
a housing body having the receiving cavity, and
a flange portion disposed on a peripheral side of the housing body and having a groove, at least a portion of the sealing member being received in the groove and disposed between the flange portion and the partition to abut against the flange portion and the partition.

5. The battery according to claim 3 or 4, further comprising:
a busbar disposed in the first accommodating cavity and electrically connecting the battery cell and the conductive terminal; and
a conductive member disposed in the second accommodating cavity and electrically connecting the electrical component and the conductive terminal.

6. The battery according to claim 5, wherein the conductive terminal has a first mounting hole at an end facing the first accommodating cavity, the first mounting hole fastening the busbar and the conductive terminal; or
the conductive terminal has a second mounting hole at an end facing the second accommodating cavity, the second mounting hole fastening the conductive member and the conductive terminal.

7. The battery according to any one of claims 3 to 6, wherein the adapter member comprises a plurality of the conductive terminals insulated from each other.

8. The battery according to any one of claims 3 to 7, comprising a plurality of the adapter members, wherein at least two of the adapter members are arranged in a first direction, at least one side of the insulation housing in the first direction is provided with a shielding portion extending outward in an axial direction of the through hole by a preset distance.

9. The battery according to any one of claims 3 to 8, wherein the adapter member further comprises a cover that covers an end of the insulation housing facing the first accommodating cavity or an end of the insulation housing facing the second accommodating cavity.

10. An electrical apparatus, comprising the battery according to any one of claims 1 to 9, the battery being configured to provide electrical energy.
